(19) **Europäisches Patentamt**

**European Patent Office**

**Office européen des brevets**

(11) **EP 0 789 222 A2**

(12) **EUROPÄISCHE PATENTANMELDUNG**

(43) Veröffentlichungstag:
13.08.1997 Patentblatt 1997/33

(51) Int. Cl.⁶: **G01B 15/02**

(21) Anmeldenummer: 96119153.3

(22) Anmeldetag: 29.11.1996

(84) Benannte Vertragsstaaten:
AT BE CH DE DK ES FI FR GB GR IE IT LI LU MC NL PT SE

(30) Priorität: 07.02.1996 DE 19604348

(71) Anmelder: **Deutsche Telekom AG**
53113 Bonn (DE)

(72) Erfinder:
• **Lösch, Rainer**
**68766 Hockenheim (DE)**

• **Hillmer, Hartmut, Dr.**
**64287 Darmstadt (DE)**
• **Schlapp, Winfried**
**64331 Weiterstadt (DE)**
• **Pöcker, Armin**
**64625 Bensheim (DE)**
• **Betz, Walter**
**64342 Seeheim-Jugenheim (DE)**
• **Göbel, Rainer, Dr.**
**55129 Mainz (DE)**

(54) **Verfahren zur Herstellung und Kalibration einer Längenskala im Nanometerbereich für technische Geräte, die der hochauflösenden bzw. ultrahochauflösenden Abbildung von Strukturen dienen**

(57) Erfindungsgemäß soll eine Längenskala zur Eichung o.g. technischer Geräte hergestellt und kalibriert werden.

Für den Aufbau der Längenskala werden mindestens zwei unterschiedliche kristalline bzw. amorphe Materialien verwendet, die sich bei der Abbildung in ihrem Kontrast voneinander gut unterscheiden. Diese Materialschichten werden mittels eines geeigneten Materialabscheideverfahrens als Heteroschichtenfolge auf einem Trägermaterial abgeschieden. Die erzeugte Heteroschichtenfolge wird experimentell mit mindestens einer Analysemethode charakterisiert, welche auf individuelle Schichtdicken der Heteroschichtenfolge sensitiv ist. Die gewonnenen Daten der Analysemethode werden ausgewertet und aufgezeichnet. Durch Auftrennung der Heteroschichtenfolge in Abscheiderichtung wird die Schichtstruktur sichtbar gemacht

Die erfindungsgemäße Lösung eignet sich insbesondere für die Eichung von technischen Geräten, die der Rasterelektronenmikroskopie, der Transmissionselektronenmikroskopie oder der Rastersondenmikroskopie (Rasterkraftmikroskopie, Rastertunnelmikroskopie) dienen.

## Beschreibung

Die erfindungsgemäße Lösung dient der Eichung der Ortskoordinaten technischer Geräte, die auf der Basis von hochauflösenden und ultrahochauflösenden Abbildungsverfahren arbeiten. Dabei handelt es sich um Abbildungsverfahren, die auf Teilchenströmen basieren, wie beispielsweise die Rasterelektronenmikroskopie, die Transmissionselektronenmikroskopie oder die Rastersondenmikroskopie (Rasterkraftmikroskopie, Rastertunnelmikroskopie).

Die technische Aufgabe besteht in der Herstellung und Kalibration einer Längenskala mittels der die o.g. technischen Geräte mit höchster Genauigkeit geeicht werden können. Die vorliegende erfindungsgemäße Lösung ermöglicht die Herstellung und Kalibration von Längenskalen im Nanometerbereich.

Folgende Arbeiten, welche thematisch mit der vorliegenden erfindungsgemäßen Lösung zusammenhängen, gehören zum bekannten Stand der Technik:

1. Technische Datenblätter der Firmen Leitz (Wetzlar) und Zeiss (Oberkochen).

Die technischen Datenblätter enthalten eine Beschreibung lithographisch definierter Metallstrukturen auf Substraten, welche im Mikrometerbereich (0.5 μm bis 10 μm) liegen. Für die Vermessung von Objekten im Nanometerbereich können diese Strukturen skaliert werden, wobei allerdings beträchtliche Fehler in Kauf genommen werden müssen.

2. Technische Datenblätter der Firma LOT (Darmstadt). In den technischen Datenblättern der Firma LOT werden lithographisch erzeugte Strukturen in Halbleitermaterialien beschrieben. Dazu zählen beispielsweise Linien- bzw. Kreuzgitter in Silizium, welche mit Hilfe holographischer Verfahren definiert werden können. Die Linien weisen dabei Abstände von 300 nm bzw. 700 nm auf;

3. Technische Datenblätter der Fa.Plano (Marburg).

In den technischen Datenblättern der Fa. Plano werden mittels Elektronenstrahlverfahren und Aluminiumbedampfung gefertigte Strukturen auf Siliziumsubstraten beschrieben. Die Dicke der erzeugten Aluminiumbahnen sowie ihre minimale Breite beträgt 500 nm;

Auch die unter Punkt 2 und Punkt 3 beschriebenen Maßstäbe müssen für die Verwendung im Nanometerbereich mit den oben bereits genannten Nachteilen skaliert werden.

Zum Stand der Röntgendiffraktometrie als Beispiel einer Analysemethode seien folgende Artikel erwähnt:

1. Appl. Phys., 56(1984), S. 1591.
Speriosu, V.S.; Vreeland, T., Jr.:
"X-ray rocking curve analysis of Superlattices",

2. Springer, Proceedings in Physics 13, Les Houches, France. Quillec, M.:
"Structural Characterisation of Superlattices by X-ray Diffraction",

3. Phys. stat. sol. (a), 105(1988), S. 197.
Baumbach; Brühl; Pietsch; Terauchi:
"Characterisation of AlGaAs/GaAs-Superlattices and Thin Layers by X-ray Diffraction",

Folgende Quellen enthalten Modellrechnungen die zur Auswertung der experimentellen Daten der Analysemethoden verwendet werden können.:

1. Acta Cryst., A42(1986), S. 539-545.
Bartels, W.J.; Hornstra, J.; Lobeek, D.J.:
"X-Ray Diffraction of Multilayers and Superlattices",

2. J. phys. soc. Japan, 26(1969), No. 5, S. 1239
Tagaki, S.:
"A dynamical Theory of Diffraction for a distorted Crystal",

3. Journal of Crystal Growth, 44(1978), S. 513-517.
Hornstra, J.; Bartels, W.J.:
"Determination of the Lattice Constant of Epitaxial Layers of III-V-Compounds",

Die Modellrechnungen basieren auf einem 1986 (1) publizierten Ansatz zur Berechnung der Reflektivitäten von Bragg-Reflexen, dem der Tagaki-Taupin-Formalismus (2) der dynamischen Theorie der Röntgenbeugung zugrunde liegt und einer Abhandlung über die Gitterkonstanten bei verspannten Epitaxieschichten von III-V-Halbleitern (3).

Mit epitaktischen Verfahren, wie z.B. der Molekularstrahlepitaxie, können Halbleiterheterostrukturen, d.h. Schichten verschiedener Komposition und Dicke, nacheinander auf einem Halbleitersubstrat abgeschieden werden. Als Beispiele der umfangreichen Literatur seien angeführt:

1. Springer Verlag, Berlin 1984, S. 88.
Springer Series in Solid-State Sciences, Band 53
Weimann, G., et al.:
"Two-dimensional Systems, Heterostructures and Superlattices",

2. J. of Cryst. Growth, 105(1990), S. 1-29.
Tsang, W.T.:
"Progress in chemical beam epitaxy"

3. H.C. Freyhardt, Springer Verlag 1980.
Ploog, K.:
"Growth, Properties and Application",

4. Thin Solid Films, 205(1991), S. 182-212.
Adomi K., et al.:
"Molecular beam epitaxial growth of GaAs and other compound semiconductors".

Allen zu epitaktischen Verfahren genannten Literaturquellen ist gemeinsam, daß sich die individuellen Schichtdicken aus den Wachstumsraten und verschiedenen Möglichkeiten der in-situ Kontrolle, wie z. B. RHEED, und der Ellipsometrie bestimmen lassen. Dabei wird jedoch nicht die Genauigkeit der vorliegenden erfindungsgemäßen Lösung erreicht.

Als Beispiel der umfangreichen Literatur über die Charakterisierung von Halbleiterheterostrukturen hauptsächlich mit Photolumineszenz, einem weiteren Beispiel einer Analysemethode, seien frühe Pionierarbeiten zitiert:

1. Festkörperprobleme, Band XV (1975), S. 21.
Dingle, R.:
"Confined Carrier Quantum States in Ultrathin Semiconductor Heterostructures",

2. Reviews of Modern Physics, 54(1982), S. 437.
Ando, T.; Fowler, A.B.; Stern, F.:

Die ermittelten experimentellen Daten der Analysemethode "Photolumineszenz" werden z. B. über die Simulation von Photolumineszenzspektren entsprechend folgender Arbeit ausgewertet:
IEEE J. Quantum Electron., 26(1990), S. 2025.
Jonsson, B.; Eng, S.T.:
"Solving the Schrödinger equation in arbitrary quantum-well potential profiles using the Transfer Matrix Method"

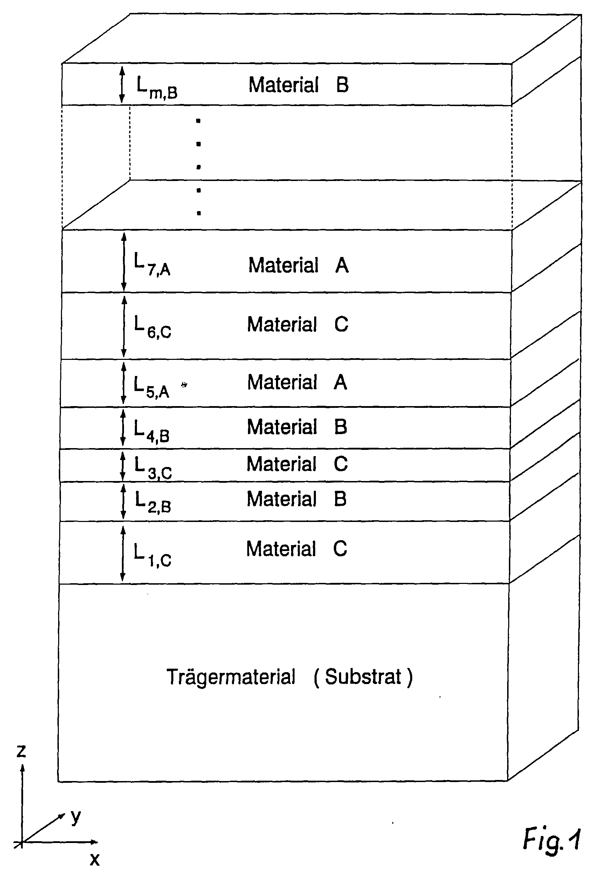

Das erfindungsgemäße Verfahren ist auf die Herstellung und Kalibration einer Längenskala im Nanometerbereich ausgerichtet. Erfindungsgemäß werden für den Aufbau der Längenskala mindestens zwei unterschiedliche kristalline beziehungsweise amorphe Materialien ( z. B. Material A, B und C usw.) entsprechend Fig. 1, verwendet. Dabei unterscheiden sich die verwendeten Materialien insbesondere dadurch, daß sie unterschiedliche Zusammensetzungen besitzen, damit sie bei der Abbildung mittels hochauflösender bzw. ultrahochauflösender Abbildungsmethoden in ihrem Kontrast voneinander gut unterscheidbar sind. Im Folgenden bezeichnet z die Abscheiderichtung des Abscheideverfahrens (vertikale Richtung). Die Grenzflächen der Heteroschichtstruktur liegen parallel zur xy-Ebene (laterale Richtungen).

Diese unterschiedlichen Materialien werden mittels eines Materialabscheideverfahrens als dünne Schichten auf einen Träger aufgebracht. Vorzugsweise kommen solche Abscheideverfahren zur Anwendung, die eine möglichst gute Homogenität der Heteroschichtstruktur in allen Raumrichtungen bezüglich Zusammensetzung und Gitterfehlanpassung der individuellen Schichten ermöglichen. Das Aufbringen der Heteroschichtstruktur auf das Trägermaterial, beispielsweise ein Substrat, erfolgt in Abscheiderichtung, wobei die unterschiedlichen Materialschichten nacheinander in wechselnder Folge auf das Substrat als Heteroschichtenfolge abgeschieden werden, bis das gesamte Schichtpaket vorliegt. Die Dicke der Einzelschichten liegt im Nanometerbereich. Die Dicke der Heteroschichtenfolge liegt im Bereich einiger zig Nanometer. Verfahrenstechnisch läßt sich die erfindungsgemäße Lösung dadurch realisieren, daß beispielsweise eine Heteroschichtstruktur aus dünnen Halbleitermaterialschichten mittels Epitaxieverfahren, wie z.B. der Molekularstrahlepitaxie, der metallorganischen Molekularstrahlepitaxie oder der metallorganischen Gasphasenepitaxie, auf einem Substrat aufgewachsen werden.

Die so erzeugte Heteroschichtenfolge wird nach der Herstellung experimentell mittels mindestens einer Analysemethode charakterisiert. Dabei muß eine Analysemethode gewählt werden, die auf individuelle Schichtdicken der Heteroschichtenfolge sensitiv ist und eine hohe Genauigkeit gewährleistet. Die zur Anwendung kommende Analysemethode bzw. die zur Anwendung kommenden Analysemethoden müssen dabei unabhängig von den hochauflösenden bzw. ultrahochauflösenden Abbildungsverfahren sein, welche in dem/den zu kalibrierenden technischen Gerät/Geräten zur Anwendung kommen. Im Zusammenhang mit dem Analyseverfahren Röntgendiffraktometrie ist die Herstellung einer periodischen kristallinen Vielfachschichtstruktur (z. B. Vielfachquantenfilmstruktur) oder einer Vielfachschicht mit einer Übergitterstruktur besonders geeignet. Besonders ausgezeichnete Dimensionen der Strukturen sind im Fall der Vielfachschichtstruktur die Dicke der Periode, sowie im Fall der Übergitterstruktur die Übergitterperiode.

Durch die Auswertung der experimentellen Daten der/des Analyseverfahren/s wird z. B. die Dicke der Periode der Heteroschichtenfolge bzw. der einzelnen Schichten der Heteroschichtenfolge bestimmt und aufgezeichnet, um damit eine Bestimmung von Abständen äquivalenter oder nichtäquivalenter Heterogrenzflächen zu ermöglichen.

Wurde eine periodische Heteroschichtstruktur aus den Materialien A und B hergestellt, so ist jede zweite Heterogrenzfläche eine äquivalente Heterogrenzfläche, wohingegen zwei benachbarte Heterogrenzflächen nichtäquivalent sind.

Nach der Auswertung der experimentellen Daten des/der Analyseverfahren wird die Schichtstruktur der unterschiedlichen kristallinen bzw. amorphen Materialien sichtbar gemacht, indem die erzeugte Heteroschichtenfolge in Abscheiderichtung aufgetrennt wird. Im Fall einer kristallinen Heteroschichtstruktur kann diese beispielsweise in Kristallebenen gespalten werden, welche die Abscheiderichtung beinhalten. Die Spaltung in Kristallebenen ist bereits ab dem Zeitpunkt möglich, ab dem der Abscheidevorgang der unterschiedlichen Materialien auf dem Substrat beendet ist. Weitere Möglichkeiten der Sichtbarmachung und Freilegung der Heteroschichtstruktur stellen Ätzen und Schrägschleifen dar.

Die experimentelle Charakterisierung der Heteroschichtenfolge, d. h. die Dickenbestimmung einiger oder aller individuellen Schichten, läßt sich durch physikalische Analysemethoden, wie z.B. der Röntgendiffraktometrie oder der Photolumineszenz, realisieren.

Wird zur Analyse einer z. B. kristallinen periodischen Heteroschichtstruktur die Röntgendiffraktometrie eingesetzt, so steigt die Genauigkeit, welche bei der Dimensionierung der herzustellenden Längenskala erreicht werden kann, mit der Anzahl der auf das Substrat aufgebrachten Schichten. Die Genauigkeit ist dabei weiter zu steigern, wenn mittels Simulationsprogrammen die experimentellen Ergebnisse der Analyseverfahren (z. B. Röntgendiffraktometrie) zusätzlich mit Modellrechnungen simuliert werden.

Zur Erhöhung des Materialkontrastes der einzelnen dünnen Schichten werden die Schichten bei Bedarf durch geeignete Verfahren, z. B. chemisches Ätzen, voneinander unterscheidbar gemacht.

Im Ergebnis des erfindungsgemäßen Verfahrens steht eine kalibrierte Längenskala in Verbindung mit der dokumentierten Bemessung der Heteroschichtenfolge der Längenskala zur Verfügung. Anhand dieser beiden Komponenten läßt sich eine Eichung von technischen Geräten durchführen, die der hochauflösenden bzw. ultrahochauflösenden Abbildung von Strukturen dienen.

Ausführungsbeispiele:

Das erfindungsgemäße Verfahren wird anhand von zwei Ausführungsbeispielen näher erläutert.

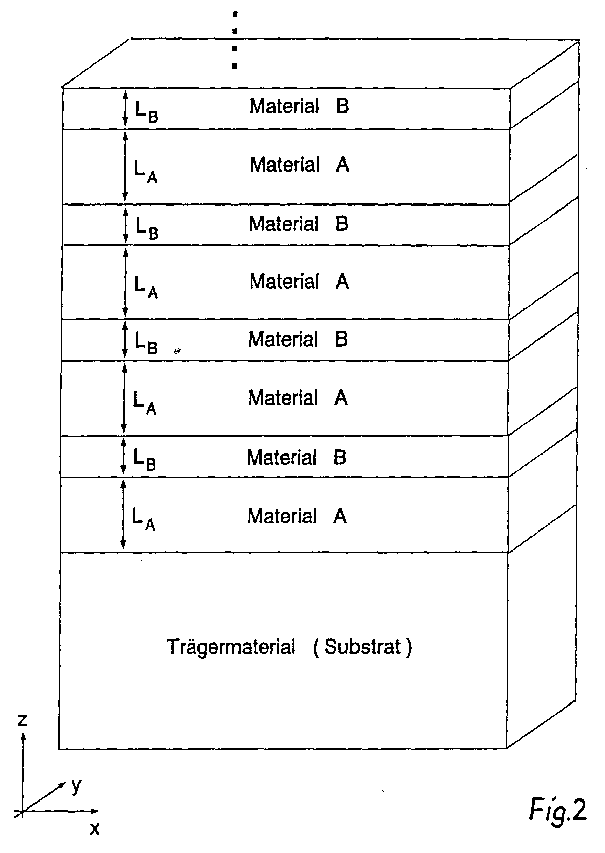

In beiden Ausführungsbeispielen werden einkristalline Halbleiterheterostrukturen mit hoher lokaler Präzision in allen Raumrichtungen mit einem geeigneten Epitaxieverfahren hergestellt. Das als Längenskala dienende Heteroschichtenpaket besteht, wie in Figur 2 abgebildet, aus einer periodischen Folge von Halbleiterschichten der alternierenden Schichtensequenzen ABABAB mit den entsprechenden Schichtdicken $L_A$ und $L_B$.

Ausführungsbeispiel 1 (kristalline periodische Halbleiterstruktur; Analysemethode: Röntgendiffraktometrie):

Für die erfindungsgemäße Lösung zur Bestimmung der Periodenlänge ($L_A + L_B$) sind 5 Randbedingungen zu beachten:

- Die epitaktischen Halbleitermaterialien A und B müssen sich in ihren Gitterkonstanten in Wachstumsrichtung wesentlich unterscheiden. Dies kann durch eine gezielte unterschiedliche Verspannung der Schichten A und B gegenüber dem Substrat mit modernen epitaktischen Verfahren erreicht werden.
- Die einkristalline, vertikale Halbleiterheterostruktur muß in Richtung parallel zur Wachstumsrichtung (xy-Ebene) in der Schichtdicke ($L_A + L_B$), im Rahmen von physikalisch unvermeidbaren Fluktuationen im atomaren Monolagenbereich, möglichst konstant sein. Diese Homogenität ist mit modernen Epitaxieverfahren zu erreichen.

- Es sollte eine ausreichend große Anzahl von Perioden n der Schichtdicke ($L_A + L_B$) in der Struktur vorhanden sein. Die Zahl n der Perioden bestimmt dabei die Genauigkeit der Längenskala, die bei der Auswertung der experimentellen Ergebnisse der Analysemethode erzielt werden kann.
- Die Nettoverspannung in der Heteroschichtenfolge von n Perioden der Periodenlänge ($L_A+L_B$) sollte möglichst klein sein, um eine Spannungsrelaxation der gesamten Schichtenfolge auszuschließen.
- Es muß sich um ein Material handeln, für das ein geeignetes Verfahren zum Freilegen der Heteroschichtenfolge existiert.
- Es muß ein Materialsystem gewählt werden, das in dem benutzten, hochauflösenden oder ultrahochauflösenden Abbildungsverfahren einen genügend großen Kontrast erzeugt.

Das für das vorliegende Ausführungsbeispiel gewählte Halbleitermaterialsystem Aluminiumgalliumindiumarsenid auf Indiumphosphid (AlGaInAs auf InP), hergestellt mit dem Epitaxieverfahren der Molekularstrahlepitaxie, genügt beispielsweise diesen Bedingungen. Es wurden Schichtenfolgen von n Perioden der Periodenlänge($L_A+L_B$) derart erzeugt, daß eine Schicht A ungefähr 0.3% bis 3% gegenüber dem Substrat InP druckverspannt ist und die zweite Schicht B ungefähr 0.3% bis 3% gegenüber dem Substrat zugverspannt ist.

Hierdurch erreicht man einerseits eine stark unterschiedliche Gitterkonstante in den beiden Materialien A und B, andererseits wird die Nettoverspannung der epitaktischen Schichtenfolge ungefähr 0, wenn folgende Bedingung erfüllt ist: Grad der Verspannung von Schicht A multipliziert mit ihrer Dicke ist gleich dem Grad der Verspannung von Schicht B multipliziert mit ihrer Dicke. Der Grad der Verspannung wird in dem im Beispiel vorliegenden Materialsystem hauptsächlich durch Variation der In-Gehalte, der Kontrast hauptsächlich durch Variation der Al-Gehalte in den Schichten A und B erzeugt.

Die erzeugte Heteroschichtenfolge $n(L_A + L_B)$ wird zum Zweck der Sichtbarmachung in bestimmten Kristallebenen gespalten, wobei die entstehenden Kristallebenen beispielsweise parallel zur Wachstumsrichtung liegen.

Eine weitere Möglichkeit zur Sichtbarmachung der Heteroschichtenfolge besteht darin, die erzeugte Heteroschichtenfolge unter einem definierten Winkel schräg zu schleifen. Der Winkel sollte so gewählt werden, daß eine möglichst gute Unterscheidung der einzelnen Schichten der Heteroschichtenfolge gewährleistet ist.

Bei den beiden geschilderten Varianten kann der Kontrast einerseits durch ein leichtes Anätzen der Bruchkante mit einer naßchemischen Ätzlösung, welche die Materialien A und B unterschiedlich angreift und andererseits durch Zuhilfenahme von kommerziell erhältlicher Software zur Bildverarbeitung, die den Materialkontrast in den technischen Geräten, welche der hochaufläsenden bzw. ultrahochauflösenden Abbildung von Strukturen dienen, zusätzlich gesteigert werden.

Desweiteren ist es möglich zur Sichtbarmachung der Heteroschichtstruktur entgegen der Abscheiderichtung Gräben in das Heteroschichtpaket zu ätzen, wobei die Grabentiefe größer als die Gesamtdicke des Heteroschichtenpakets sein muß.

Eine andere Möglichkeit zur Sichtbarmachung der Heteroschichtstruktur besteht darin, in das Heteroschichtpaket Inseln zu ätzen. Dabei muß der Materialabtrag entgegen der Abscheiderichtung ebenfalls größer als die Gesamtdicke des Heteroschichtenpakets sein.

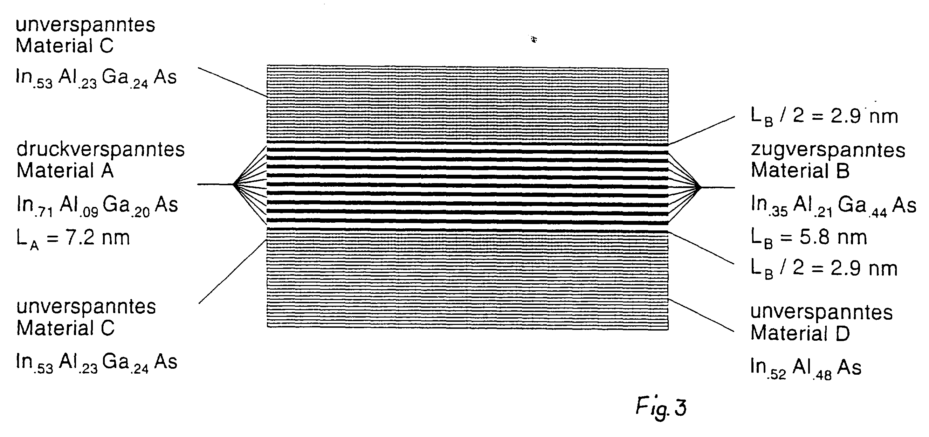

Figur 3 zeigt eine schematische Darstellung einer als kalibrierte Längenskala geeigneten Halbleiterheteroschichtenfolge im Querschnitt. Die kompositionellen Zusammensetzungen sowie die Dimensionen der einzelnen Schichten sind im Bild angegeben. Die Struktur weist $n = 10$ Perioden der Dicke $L_A + L_B$ auf. Die Verspannung im Material mit der geringeren Bandlücke beträgt $\Delta a/a = +1.2\%$, die Verspannung im Material mit der größeren Bandlücke beläuft sich auf $\Delta a/a = -1.4\%$.

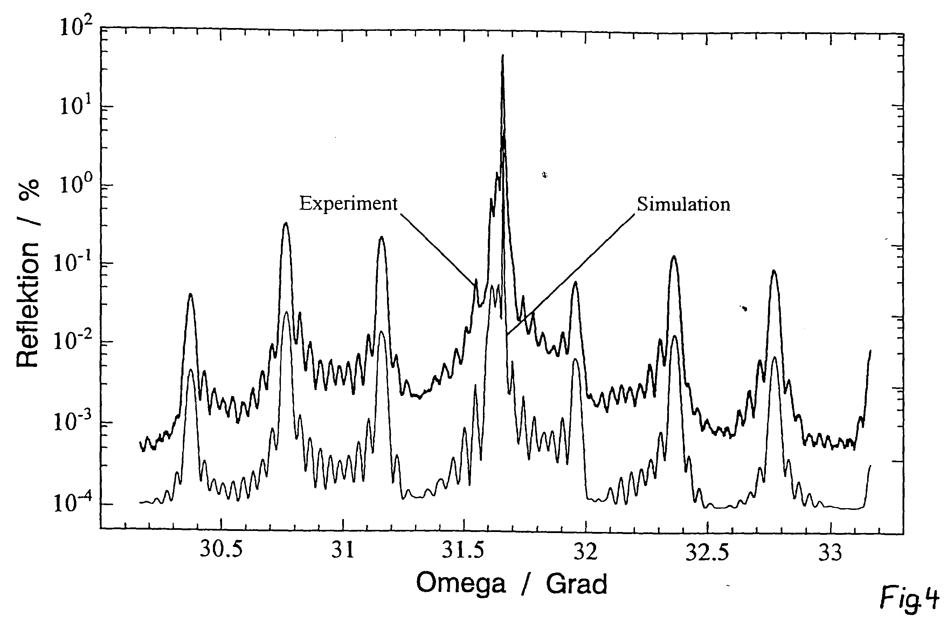

Die Genauigkeit der Dickenbestimmung der auftretenden Periode ($L_A + L_B$) hängt im wesentlichen von der Meßgenauigkeit der in diesem Beispiel benutzten Analysemethode, der Röntgendiffraktometrie und der Genauigkeit ab, mit der die in der Modellrechnung (Simulation) verwendeten physikalischen Parameter bekannt sind. Gemessene Röntgendiffraktometriespektren werden dabei mit rechnerisch simulierten Spektren verglichen (Figur 4). Die simulierte Kurve ist hierbei zur Verdeutlichung nach unten verschoben. Die simulierten Spektren können dabei an die gemessenen Spektren so genau angeglichen (angepaßt) werden, daß der Fehler des rechnerischen Ergebnisses für die Periode des Ausführungsbeispiels in Bild 3 ($L_A + L_B = 13$ nm) unterhalb von 0.1 nm liegt. Das bedeutet einen relativen Fehler der Dickenbestimmung von $< 0.8\%$.

Ausführungsbeispiel 2 (kristalline periodische Halbleiterstruktur; Analysemethoden: Röntgendiffraktometrie und Photolumineszenz):

Für die erfindungsgemäße Lösung zur Bestimmung der Periode ($L_A + L_B$) sowie zusätzlich der individuellen Dicken ($L_A$ und $L_B$) nach Ausführungsbeispiel 2 sind zwei Randbedingungen zusätzlich zu den im Ausführungsbeispiel 1 aufgeführten Randbedingungen erforderlich:

- Die Bandlücken der Materialien müssen unterschiedlich sein.
- Von den epitaktisch hergestellten Halbleitermaterialien muß dasjenige mit der kleineren Bandkantenenergie eine direkte Bandlücke aufweisen.

Das für das vorliegende Ausführungsbeispiel gewählte Halbleitermaterialsystem AlGaInAs auf InP genügt bei geeigneter Wahl der Kompositionsparameter auch diesen Bedingungen. Es werden im Rahmen dieses 2. Ausführungsbeispiels zwei Schichtenfolgen hergestellt mit dem Aufbau $n(L_A + L_B)$ und $n(L_A + xL_B)$, wobei $L_A$ der Schicht mit der kleineren Bandkantenenergie zugeordnet ist, die bei beiden Schichtenfolgen beibehalten wird, während $L_B$ und $xL_B$ den Schichten mit der größeren Bandkantenenergie zugeordnet sind, die bewußt unterschiedlich dick gewählt werden. Den Unterschied in der Dicke drückt der Parameter x aus, der z.B. $x = 3/2$ beträgt. In diesem Fall darf das spektrale Emissionssignal bei der Photolumineszenz-Analysemethode nicht von der Änderung der Schichtdicke von $L_B$ zu $x \cdot L_B$ abhängen ($L_B$ muß groß genug gewählt werden). Die beiden Halbleiterschichtenfolgen werden, wie unter Ausführungsbeispiel 1 beschrieben, mit Hilfe der Röntgendiffraktometrie ausgewertet. Um sicherzustellen, daß $L_A$ in beiden unterschiedlichen Schichtenfolgen gleich dick ist, wird mit Hilfe der Photolumineszenz die für $L_A$ bei einer bestimmten Materialzusammensetzung charakteristische Emissionswellenlänge bestimmt. Bei identischer Emissionswellenlänge im Photolumineszenzspektrum und damit identischem $L_A$ lassen sich zusammen mit den Meßergebnissen der Röntgendiffraktometrie zwei Gleichungen mit zwei Unbekannten, $L_A$ und $L_B$, aufstellen und lösen. Ansonsten gelten alle unter dem 1. Ausführungsbeispiel gemachten Angaben, einschließlich der Fehlerabschätzung.

Anstatt der Photolumineszenzcharakterisierung können auch z.B. Photoreflexions-, Absorptions- oder Transmissionsuntersuchungen zum Einsatz kommen.

Bei der Kalibrierung des Mikroskopes mit Hilfe der erfindungsgemäßen Lösung sollte die Anzahl der Perioden n der Schichtenfolgen A und B möglichst groß sein, um den Ablesefehler zu verringern.

## Patentansprüche

1. Verfahren zur Herstellung und Kalibration einer Längenskala im Nanometerbereich für technische Geräte, die der hochauflösenden bzw. ultrahochauflösenden Abbildung von Strukturen dienen, dadurch gekennzeichnet, daß

   -a    für den Aufbau der Längenskala mindestens zwei unterschiedliche kristalline bzw. amorphe Materialien als Heteroschichtstruktur verwendet werden, die sich bei der Abbildung mittels hochauflösender bzw. ultrahochauflösender Abbildungsmethoden in ihrem Kontrast voneinander gut unterscheiden, daß

   -b    die verwendeten unterschiedlichen kristallinen bzw. amorphen Materialschichten mittels eines Materialabscheideverfahrens in Abscheiderichtung nacheinander in wechselnder Folge auf einem Trägermaterial als Heteroschichtenfolge abgeschieden werden, bis das gesamte Schichtenpaket vorliegt, daß

   -c    die Heteroschichtenfolge experimentell mit einer Analysemethode charakterisiert wird, welche auf Schichtdicken der Heteroschichtenfolge sensitiv ist, wobei die zur Anwendung kommende Analysemethode unabhängig von den hochauflösenden bzw. ultrahochauflösenden Abbildungsverfahren ist, welche in den technischen Geräten, für welche die Längenskala hergestellt wird, eingesetzt werden, daß

-d  die experimentellen Daten der Analysemethode ausgewertet und aufgezeichnet werden, um damit eine Bestimmung von Abständen äquivalenter Heterogrenzflächen zu ermöglichen, und daß

-e  danach, bzw. bereits nach dem Schritt nach Punkt b bzw. dem Schritt nach Punkt c, die Heteroschichtstruktur der unterschiedlichen Materialien durch Auftrennung der Heteroschichtenfolge in Abscheiderichtung sichtbar gemacht wird.

2.  Verfahren nach Anspruch 1, dadurch gekennzeichnet, daß vorzugsweise solche Abscheideverfahren angewendet werden, die eine möglichst gute Homogenität der Heteroschichtstruktur in alle Raumrichtungen bezüglich Zusammensetzung und Gitterfehlanpassung der individuellen Schichten, ermöglichen.

3.  Verfahren nach Anspruch 1, dadurch gekennzeichnet, daß die Genauigkeit, die bei der Kalibration der herzustellenden Längenskala erreicht wird, mit der Anzahl der auf das Trägermaterial aufgebrachten Schichten steigt und daß die Dicke der Einzelschichten im Nanometerbereich und die Dicke der gesamten Heteroschichtenfolge im Bereich einiger zig Nanometer liegt.

4.  Verfahren nach Anspruch 1, dadurch gekennzeichnet, daß mindestens zwei von den Abbildungsverfahren unabhängige Analysemethoden zur Anwendung kommen, wobei die experimentellen Daten ausgewertet werden, um damit eine Bestimmung von Abständen auch nichtäquivalenter Heterogrenzflächen der Heteroschichtenfolge zu ermöglichen.

5.  Verfahren nach Anspruch 1 und 4, dadurch gekennzeichnet, daß die experimentell mittels der Analysemethode/n ermittelten Daten ausgewertet werden, indem die experimentellen Ergebnisse der Analysemethode/n zusätzlich mit Hilfe von physikalischen Modellrechnungen simuliert und damit die geometrischen Parameter, wie die Schichtdicken und die Abstände der Heterogrenzflächen voneinander, präziser ermittelt werden.

6.  Verfahren nach Anspruch 1, dadurch gekennzeichnet, daß nach Herstellung einer periodischen Heteroschichtenfolge nach der Auswertung der experimentellen Daten der Analysemethode die Periodendicke ermittelt wird.

7.  Verfahren nach Anspruch 1 und 4, dadurch gekennzeichnet, daß nach Herstellung einer periodischen Heteroschichtenfolge nach Auswertung der experimentellen Daten der Analysemethode/n die Dicken der einzelnen Schichten der Heteroschichtenfolge ermittelt werden.

8.  Verfahren nach Anspruch 1 und 4, dadurch gekennzeichnet, daß nach Herstellung einer Heteroschichtenfolge mit Übergitterstruktur nach Auswertung der experimentellen Daten der Analysemethoden besonders charakteristische Parameter der Heteroschichtenfolge, wie die Länge der Übergitterperiode, ermittelt werden.

9.  Verfahren nach Anspruch 1, dadurch gekennzeichnet, daß nach Herstellung einer periodischen Heteroschichtstruktur aus zwei Materialien mittels epitaktischer Verfahren in den beiden Materialschichten eine unterschiedliche kristalline Verspannung erzeugt wird und daß damit die bei der Auswertung der experimentellen Daten der Analysemethode/n erzielbare Genauigkeit erhöht wird.

10.  Verfahren nach Anspruch 1 und 9, dadurch gekennzeichnet, daß nach Herstellung einer periodischen Heteroschichtstruktur aus zwei Materialschichten A und B die Materialschicht A gegenüber dem Trägermaterial druckverspannt und die Materialschicht B gegenüber dem Trägermaterial zugverspannt ist, wobei die kristalline Nettoverspannung der epitaktischen Schichtfolge ungefähr gegen Null geht, wenn der Grad der Verspannung der Materialschicht A multipliziert mit ihrer Dicke gleich dem Grad der Verspannung von der Materialschicht B multipliziert mit ihrer Dicke ist.

11.  Verfahren nach Anspruch 1, 9 und 10, dadurch gekennzeichnet, daß der Grad der kristallinen Verspannung durch Variation der in den unterschiedlichen Materialien A und B enthaltenen Bestandteile bestimmt wird.

12.  Verfahren nach Anspruch 1, dadurch gekennzeichnet, daß zur Sichtbarmachung der Heteroschichtstruktur die erzeugte Heteroschichtenfolge in Ebenen gespalten wird, welche die Abscheiderichtung enthalten.

13.  Verfahren nach Anspruch 1, dadurch gekennzeichnet, daß zur Sichtbarmachung der Heteroschichtstruktur die erzeugte Heteroschichtenfolge unter einem definierten Winkel schräggeschliffen wird.

14.  Verfahren nach Anspruch 1, dadurch gekennzeichnet, daß zur Sichtbarmachung der Heteroschichtstruktur entgegen der Abscheiderichtung Gräben in das Heteroschichtpaket geätzt werden, wobei die Grabentiefe größer als die Gesamtdicke des Heteroschichtenpakets ist.

15. Verfahren nach Anspruch 1, dadurch gekennzeichnet, daß zur Sichtbarmachung der Heteroschichtstruktur Inseln geätzt werden, wobei der Materialabtrag entgegen der Abscheiderichtung größer als die Gesamtdicke des Heteroschichtenpakets ist.

16. Verfahren nach Anspruch 1, 12, 13, 14 und 15, dadurch gekennzeichnet, daß der Kontrast zwischen den unterschiedlichen kristallinen bzw. amorphen Materialien dadurch erhöht wird, daß die durch Auftrennen der Heteroschichtenfolge entstandenen Flächen leicht angeätzt werden, wobei eine naßchemische Lösung verwendet wird, welche die Materialien A und B unterschiedlich stark angreift.

17. Verfahren nach Anspruch 1 und 4, dadurch gekennzeichnet, daß zur epitaktischen Herstellung einer Heteroschichtstruktur zwei kristallinen Materialien A und B mit unterschiedlichen Bandlücken eingesetzt werden, wobei das Material mit der kleineren Bandkantenenergie eine direkte Bandlücke aufweist, und daß als Analysemethoden die Röntgendiffraktometrie und die Photolumineszenz verwendet werden

18. Verfahren nach Anspruch 1, dadurch gekennzeichnet, daß der Materialkontrast zwischen den unterschiedlichen kristallinen bzw. amorphen Materialien in den technischen Geräten, die der hochauflösenden bzw. ultrahochauflösenden Abbildung dienen, mittels kommerziell erhältlicher Software zur Bildverarbeitung verstärkt wird.

19. Verfahren nach Anspruch 1, dadurch gekennzeichnet, daß die Dickenbestimmung der Schichten der Heteroschichtenfolge mittels der Methode der Röntgendiffraktometrie vorgenommen wird, wobei die gemessenen Röntgendiffraktometriespektren mit rechnerisch simulierten Spektren verglichen werden und daß dabei die rechnerisch simulierten Spektren so genau an die gemessenen Spektren angeglichen werden, daß der relative Fehler der Dickenbestimmung unter 1% liegt.

$L_{m,B}$      Material B

$L_{7,A}$      Material A

$L_{6,C}$      Material C

$L_{5,A}$      Material A

$L_{4,B}$      Material B

$L_{3,C}$      Material C

$L_{2,B}$      Material B

$L_{1,C}$      Material C

Trägermaterial (Substrat)

z

y

x

Fig. 1

EP 0 789 222 A2

Fig.2

9

unverspanntes
Material C

$In_{.53} Al_{.23} Ga_{.24} As$

druckverspanntes
Material A

$In_{.71} Al_{.09} Ga_{.20} As$

$L_A = 7.2$ nm

unverspanntes
Material C

$In_{.53} Al_{.23} Ga_{.24} As$

$L_B / 2 = 2.9$ nm

zugverspanntes
Material B

$In_{.35} Al_{.21} Ga_{.44} As$

$L_B = 5.8$ nm

$L_B / 2 = 2.9$ nm

unverspanntes
Material D

$In_{.52} Al_{.48} As$

Fig. 3

EP 0 789 222 A2

Fig.4